# EUROPEAN PATENT APPLICATION

(11) **EP 4 543 071 A1**
(43) Date of publication of application: **23.04.2025**
(21) Application number: 22946245.2
(22) Date of filing: 16.06.2022
(51) Int. Cl.: H04W 24/02

(54) **REPORTING METHODS, APPARATUSES, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/099238
(87) International publication number: WO 2023/240556

(57) **Abstract**

Provided in the present disclosure are reporting method, apparatuses, a device and a storage medium. A method comprises: receiving at least one first positioning signal sent by a first TRP; measuring the first positioning signal to obtain a measurement result, the measurement result comprising at least one of a first carrier phase measurement result, a Doppler parameter and a second carrier phase measurement result, and the second carrier phase measurement result being a result obtained by adjusting the first carrier phase measurement result on the basis of the Doppler parameter; and reporting to a core network device a measurement report, the measurement report comprising the measurement result. The method provided by the present disclosure ensures the precision of the carrier phase positioning method.

## Description

### TECHNICAL FIELD

The disclosure relates to the field of communication technologies, and in particular, to a reporting method/apparatus/device and a storage medium.

### BACKGROUND

In NR (new radio, new air interface) systems, in order to improve the accuracy of positioning methods, carrier phase based positioning methods are usually used to position devices.

In the related art, when using carrier phase based positioning methods for positioning, the receiving end usually needs to receive the positioning signal and measure and report at least one of the integer part of the phase of the positioning signal (such as the integer part of the quotient of the transmission distance and the carrier wavelength) and the decimal part of the phase that is less than the integer part (such as the decimal part of the quotient of the transmission distance and the carrier wavelength).

However, in the related art, for the receiving device, Doppler effects can cause the carrier frequency of the positioning signal received by the receiving device to be lower or higher than the actual carrier frequency when the transmitting device sends the positioning signal, resulting in inaccurate phase measurement based on the positioning signal, including the integer and fractional parts of the phase, which affects the accuracy of the carrier phase positioning method.

### SUMMARY

The reporting method/apparatus/device and storage medium proposed in this disclosure are used to solve the technical problem of low accuracy of carrier phase positioning methods in the related art.

In a first aspect, embodiments of the present disclosure provide a reporting method. The method is performed by a terminal device, and includes:
receiving at least one first positioning signal sent by a first transmission reception point (TRP);
measuring the first positioning signal to obtain a measurement result, in which the measurement result includes at least one of a first carrier phase measurement result, a Doppler parameter, or a second carrier phase measurement result, in which the second carrier phase measurement result is obtained by adjusting the first carrier phase measurement result based on the Doppler parameter; and
reporting a measurement report to a core network device, in which the measurement report includes the measurement result.

In this disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., the measurement results adjusted according to the Doppler effect), ensuring the accuracy of the carrier phase positioning method.

In a second aspect, embodiments of the present disclosure provide a reporting method. The method is performed by a base station, and includes:
receiving at least one positioning signal sent by a terminal device;
measuring the positioning signal to obtain a measurement result, in which the measurement result includes at least one of a first carrier phase measurement result, a Doppler parameter, or a second carrier phase measurement result, in which the second carrier phase measurement result is obtained by adjusting the first carrier phase measurement result based on the Doppler parameter; and
reporting a measurement result to a core network device, in which the measurement report includes the measurement result.

In a third aspect, embodiments of the present disclosure provide a reporting method. The method is performed by a core network device, and includes:
receiving a measurement report reported by a base station, in which the measurement report includes at least one of a first carrier phase measurement result, a Doppler parameter, or a second carrier phase measurement result, in which the second carrier phase measurement result is obtained by adjusting the first carrier phase measurement result based on the Doppler parameter.

In a fourth aspect, embodiments of the present disclosure provide a communication device. The device is configured in a terminal device, and includes:
a transceiver module, configured to receive at least one first positioning signal sent by a first TRP; and
a processing module, configured to measure the first positioning signal to obtain a measurement result, in which the measurement result includes at least one of a first carrier phase measurement result, a Doppler parameter, or a second carrier phase measurement result, in which the second carrier phase measurement result is obtained by adjusting the first carrier phase measurement result based on the Doppler parameter;
the transceiver module is further configured to report a measurement report to a core network device, in which the measurement report includes the measurement result.

In a fifth aspect, embodiments of the present disclosure provide a communication device. The device is configured in a base station, and includes:
a transceiver module, configured to receive at least one positioning signal sent by a terminal device; and
a processing module, configured to measure the positioning signal to obtain a measurement result, in which the measurement result includes at least one of a first carrier phase measurement result, a Doppler parameter, or a second carrier phase measurement result, in which the second carrier phase measurement result is obtained by adjusting the first carrier phase measurement result based on the Doppler parameter;
the transceiver module is configured to report a measurement result to a core network device, in which the measurement report includes the measurement result.

In a sixth aspect, embodiments of the present disclosure provide a communication device. The device is configured in a core network device, and includes:
a transceiver module, configured to receive a measurement report reported by a base station, in which the measurement report includes at least one of a first carrier phase measurement result, a Doppler parameter, or a second carrier phase measurement result, in which the second carrier phase measurement result is obtained by adjusting the first carrier phase measurement result based on the Doppler parameter.

In a seventh aspect, embodiments of the present disclosure provide a communication device. The communication device includes a processor. When the processor is configured to call a computer program in a memory, the method described in the first aspect is implemented.

In an eighth aspect, embodiments of the present disclosure provide a communication device. The communication device includes a processor. When the processor is configured to call a computer program in a memory, the method described in the second aspect is implemented.

In a ninth aspect, embodiments of the present disclosure provide a communication device. The communication device includes a processor. When the processor is configured to call a computer program in a memory, the method described in the third aspect is implemented.

In a tenth aspect, embodiments of the present disclosure provide a communication device. The communication device includes a processor and a memory. The memory is stored with a computer program. The processor is configured to execute the computer program stored in the memory, so as to cause the communication device to implement the method described in the first aspect.

In an eleventh aspect, embodiments of the present disclosure provide a communication device. The communication device includes a processor and a memory. The memory is stored with a computer program. The processor is configured to execute the computer program stored in the memory, so as to cause the communication device to implement the method described in the second aspect.

In a twelfth aspect, embodiments of the present disclosure provide a communication device. The communication device includes a processor and a memory. The memory is stored with a computer program. The processor is configured to execute the computer program stored in the memory, so as to cause the communication device to implement the method described in the third aspect.

In a thirteenth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the first aspect.

In a fourteenth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the second aspect.

In a fifteenth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the third aspect.

In a sixteenth aspect, embodiments of the present disclosure provide a communication system. The system includes the communication device as described in the fourth aspect to the communication device as described in the sixth aspect, or the system includes the communication device as described in the seventh aspect to the communication device as described in the ninth aspect, or the system includes the communication device as described in the tenth aspect to the communication device as described in the twelfth aspect, or the system includes the communication device as described in the thirteenth aspect to the communication device as described in the fifteenth aspect.

In a seventeenth aspect, embodiments of the present disclosure provide a computer readable storage medium, configured to store instructions used by a network device, which when executed, cause the terminal device to implement the method described in any of the first aspect to the third aspect.

In an eighteenth aspect, the present disclosure further provides a computer program product including a computer program that, when run on a computer, causes the computer to perform the method described in any of the first aspect to the third aspect.

In a nineteenth aspect, the present disclosure provides a chip system. The chip system includes at least one processor and an interface for supporting the network device to implement the functions involved in any of the first aspect to the second aspect, such as determining or processing at least one of the data and information involved in the above method. In one possible design, the chip system further includes a memory for storing necessary computer programs and data for the terminal device. This chip system may be combined by chips or include chips and other discrete components.

In a twentieth aspect, the present disclosure provides a computer program which, when run a computer, causes the computer to implement the method described in any of the first aspect to the third aspect.

### BRIEF DESCRIPTION OF THE DRAWINGS

The above and/or additional aspects and advantages of the present disclosure will become apparent and easily understood from the following description of the embodiments in conjunction with the accompanying drawings.
Fig. 1 is a schematic diagram of an architecture of a communication system provided in an embodiment of the present disclosure.
Fig. 2a is a schematic flowchart of a reporting method provided in another embodiment of the present disclosure.
Fig. 2b is a schematic flowchart of a reporting method provided in another embodiment of the present disclosure.
Fig. 2c is a schematic flowchart of a reporting method provided in another embodiment of the present disclosure.
Fig. 3 is a schematic flowchart of a reporting method provided in yet another embodiment of the present disclosure.
Fig. 4 is a schematic flowchart of a reporting method provided in still yet another embodiment of the present disclosure.
Fig. 5 is a schematic flowchart of a reporting method provided in another embodiment of the present disclosure.
Fig. 6 is a schematic flowchart of a reporting method provided in yet another embodiment of the present disclosure.
Fig. 7a is a schematic flowchart of a reporting method provided in still yet another embodiment of the present disclosure.
Fig. 7b is a schematic flowchart of a reporting method provided in still yet another embodiment of the present disclosure.
Fig. 8a is a schematic flowchart of a reporting method provided in an embodiment of the present disclosure.
Fig. 8b is a schematic flowchart of a reporting method provided in an embodiment of the present disclosure.
Fig. 8c is a schematic flowchart of a reporting method provided in an embodiment of the present disclosure.
Fig. 9 is a schematic flowchart of a reporting method provided in another embodiment of the present disclosure.
Fig. 10 is a schematic flowchart of a reporting method provided in another embodiment of the present disclosure.
Fig. 11 is a schematic flowchart of a reporting method provided in another embodiment of the present disclosure.
Fig. 12 is a schematic flowchart of a reporting method provided in another embodiment of the present disclosure.
Fig. 13a is a schematic flowchart of a reporting method provided in another embodiment of the present disclosure.
Fig. 13b is a schematic flowchart of a reporting method provided in another embodiment of the present disclosure.
Fig. 14a is a schematic flowchart of a reporting method provided in another embodiment of the present disclosure.
Fig. 14b is a schematic flowchart of a reporting method provided in another embodiment of the present disclosure.
Fig. 14c is a schematic flowchart of a reporting method provided in another embodiment of the present disclosure.
Fig. 15 is a schematic flowchart of a reporting method provided in another embodiment of the present disclosure.
Fig. 16 is a schematic flowchart of a reporting method provided in another embodiment of the present disclosure.
Fig. 17 is a schematic flowchart of a reporting method provided in another embodiment of the present disclosure.
Fig. 18 is a schematic flowchart of a reporting method provided in another embodiment of the present disclosure.
Fig. 19 is a block diagram of a communication device provided in an embodiment of the present disclosure.
Fig. 20 is a block diagram of a communication device provided in another embodiment of the present disclosure.
Fig. 21 is a block diagram of a communication device provided in another embodiment of the present disclosure.
Fig. 22 is a block diagram of a user equipment provided in an embodiment of the present disclosure.
Fig. 23 is a block diagram of a network side device provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although the terms first, second, third, etc. may be used to describe various information in embodiments of the present disclosure, these terms should not be limited to them. These terms are only used to distinguish information of the same type from each other. For example, without departing from the scope of embodiments of the present disclosure, the first information may also be referred to as the second information, and similarly, the second information may also be referred to as the first information. Depending on the context, the words "if" and "in case" used here can be interpreted as "when" or "upon" or "in response to a determination".

The following provides a detailed description of embodiments of the present disclosure, examples of which are shown in the accompanying drawings, where the same or similar reference numerals throughout represent the same or similar elements. The embodiments described below with reference to the accompanying drawings are exemplary and intended to explain the present disclosure, and should not be construed as limiting the present disclosure.

For ease of understanding, the terms involved in this disclosure are first introduced.
1. Carrier phase
   Carrier phase, also known as carrier beat phase, is the difference between the carrier phase of the received satellite signal affected by Doppler frequency shift and the signal phase generated by the local oscillation of the receiver, or the carrier phase of the satellite signal affected by Doppler frequency shift.
2. Line of sight (LoS)
   The LoS refers to the path of the wireless signal when it is transmitted in a straight line without obstruction between the transmitting and receiving ends.
3. Non-LoS
   The non-LoS refers to the path of the wireless signal when it is not transmitted in a straight line between the transmitting and receiving ends.
4. Doppler frequency offset
   The Doppler frequency offset refers to the frequency expansion or compression of electromagnetic waves caused by the relative motion between the transmitting and receiving ends.
5. Doppler spread
   The Doppler spread refers to the frequency range where the Doppler frequency offset is not equal to zero.

In order to better understand the reporting method disclosed in embodiments of the present disclosure, the following first describes the communication system applicable to embodiments of the present disclosure.

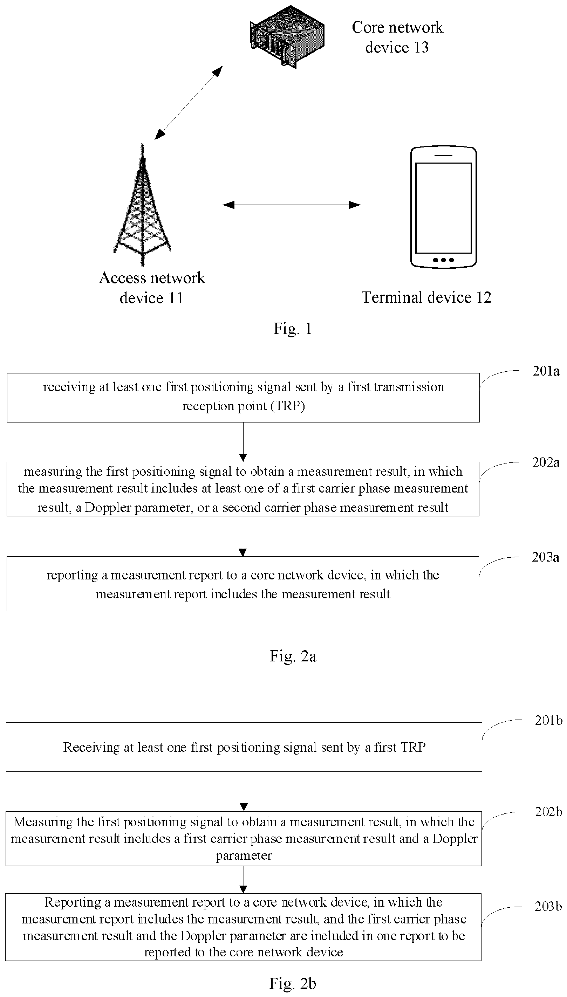

Please refer to Fig. 1, which is a schematic diagram of an architecture of a communication system provided in an embodiment of the present disclosure. The communication system may include, but is not limited to, one access network device, one terminal device and one core network device. The number and form of devices shown in Fig. 1 are for example only and do not constitute a limitation on the embodiments of the present disclosure. In practical applications, it may include two or more access network devices and two or more terminal devices. The communication system shown in Fig. 1 takes the example of including one access network device 11, one terminal device 12 and one core network device 13.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The access network device 11 in embodiments of the present disclosure is an entity on the network side used for transmitting or receiving signals. For example, the access network device 11 may be an evolved NodeB (eNB), a transmission reception point (TRP), a next generation NodeB (gNB) in an NR system, a base station in other future mobile communication systems, or an access node in a wireless fidelity (WiFi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and the remaining or all protocol layer functions distributed in the DUs, which are centrally controlled by the CU.

For example, each access network device 11 includes one or more Transmission Reception Points (TRPs), each of which can be referred to as one positioning node. The terminal device receives the downlink positioning signal sent by the positioning node and measures and reports the downlink positioning signal. Alternatively, the terminal device sends an uplink positioning signal, and the positioning node receives the uplink positioning signal sent by the terminal device and measures and reports the uplink positioning signal.

The core network device 13 is a device deployed in the core network. The main functions of core network device 13 are to provide user connections, manage users, and complete business hosting, serving as an interface for the hosting network to external networks. For example, the core network device in a 5G NR system may include Access and Mobility Management Function (AMF) network elements, User Plane Function (UPF) network elements, and Session Management Function (SMF) network elements.

As an example, the core network device 13 in the embodiments of the present disclosure may include a location management function network element. Optionally, the location management function network element includes a location server, which can be implemented as any of the following: LMF (Location Management Function), E-SMLC (Enhanced Serving Mobile Location Centre), SUPL (Secure User Plane Location), SUPL SLP (Secure User Plane Location Platform).

In an example, the access network device 12 and the core network device 13 communicate with each other through some air interface technology, such as the NG interface in the 5G NR system. The access network device 12 and the terminal device 11 communicate with each other through some air interface technology, such as the Uu interface.

The terminal device 102 in embodiments of the present disclosure is an entity on the user side used for receiving or transmitting signals, such as a mobile phone. The terminal device may also be referred to as terminal, user equipment (UE), mobile station (MS), mobile terminal (MT), etc. The terminal device may be communication enabled car, smart car, mobile phone, wearable device, tablet, computer with wireless transmission and reception capabilities, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city and wireless terminal device in smart home, etc. The specific technology and device form adopted by the terminal device is not limited in embodiments of the present disclosure.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

The following provides a detailed description of the reporting method/apparatus/device and storage medium provided in embodiments of the present disclosure with reference to the accompanying drawings.

Fig. 2a is a schematic flowchart of a reporting method provided in an embodiment of the present disclosure. The method is performed by a terminal device, and as shown in Fig. 2a, the reporting method may include the following steps.

In step 201a, at least one positioning signal sent by a first TRP is received.

In an embodiment of the present disclosure, the first positioning signal may be a Positioning Reference Signal (PRS), a Sounding Reference Signal (SRS), or other reference signals used for positioning.

In step 202a, the first positioning signal is measured to obtain a measurement result, in which the measurement result includes at least one of a first carrier phase measurement result, a Doppler parameter, or a second carrier phase measurement result.

In an embodiment of the present disclosure, the first carrier phase measurement result and Doppler parameter are obtained by measuring each first positioning signal, and the first carrier phase measurement result corresponds one-to-one with the Doppler parameter. The second carrier phase measurement result is obtained by adjusting the corresponding first carrier phase measurement result based on the Doppler parameter.

Further, in an embodiment of the present disclosure, the first carrier phase measurement result may include at least one of:
a carrier phase value (that is, absolute value);
a carrier phase difference; or
a carrier phase relative value.

The Doppler parameter may include at least one of:
a Doppler frequency offset; or
a Doppler spread.

The second carrier phase measurement result may include at least one of:
a carrier phase value adjusted based on the Doppler parameter;
a carrier phase difference adjusted based on the Doppler parameter; or
a carrier phase relative value adjusted based on the Doppler parameter.

In embodiments of the present disclosure, the carrier phase value, carrier phase difference value, and carrier phase relative value may all include at least one of the integer number of phase cycles and the fractional part of the cycle that is less than an integer.

In step 203a, a measurement report is reported to a core network device, in which the measurement report includes the measurement result.

In an embodiment of the present disclosure, the terminal device may report the measurement report to the core network device.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 2b is a schematic flowchart of a positioning method provided in an embodiment of the present disclosure. The method is performed by a terminal device, and as shown in Fig. 2b, the reporting method may include the following steps.

In step 201b, at least one first positioning signal sent by a first TRP is received.

In step 202b, the first positioning signal is measured to obtain a measurement result, in which the measurement result includes a first carrier phase measurement result and a Doppler parameter.

For a detailed introduction of steps 201b to 202b, please refer to the above embodiment description.

In step 203b, a measurement report is reported to a core network device, in which the measurement report includes the measurement result, and the first carrier phase measurement result and the Doppler parameter are included in one report to be reported to the core network device.

In an embodiment of the present disclosure, the terminal device may report the measurement report to the core network device.

In an embodiment of the present disclosure, after receiving the first carrier phase measurement result and Doppler parameter reported by the terminal device, the core network device may adjust the corresponding first carrier phase measurement result based on the Doppler parameter to obtain the second carrier phase measurement result, and perform positioning calculation based on the second carrier phase measurement result.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in this disclosed embodiment, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

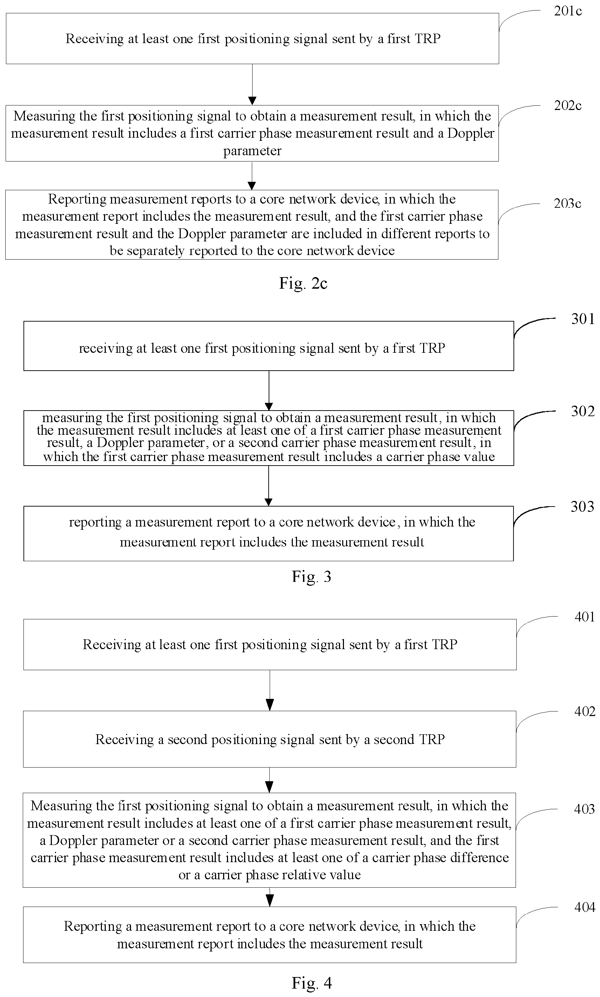

Fig. 2c is a schematic flowchart of a reporting method provided in an embodiment of the present disclosure. The method is performed by a terminal device, and as shown in Fig. 2c, the reporting method may include the following steps.

In step 201c, at least one first positioning signal sent by a first TRP is received.

In step 202c, the first positioning signal is measured to obtain a measurement result, in which the measurement result includes a first carrier phase measurement result and a Doppler parameter.

For a detailed introduction of steps 201c to 202c, please refer to the above embodiment description.

In step 203c, measurement reports are reported to a core network device, in which the measurement report includes the measurement result, and the first carrier phase measurement result and the Doppler parameter are included in different reports to be separately reported to the core network device.

In an embodiment of the present disclosure, the terminal device may report the measurement reports to the core network device.

In an embodiment of the present disclosure, the core network device may adjust the first carrier phase measurement result reported separately by the terminal device based on the Doppler parameter reported separately by the terminal device, to obtain the second carrier phase measurement result, and perform positioning calculation based on the second carrier phase measurement result.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 3 is a schematic flowchart of a reporting method provided in an embodiment of the present disclosure. The method is performed by a terminal device, and as shown in Fig. 3, the reporting method may include the following steps.

In step 301, at least one first positioning signal sent by a first TRP is received.

For a detailed introduction of step 301, please refer to the above embodiment description, which will not be repeated here.

In step 302, the first positioning signal is measured to obtain a measurement result, in which the measurement result includes at least one of a first carrier phase measurement result, a Doppler parameter or a second carrier phase measurement result, and the first carrier phase measurement result includes a carrier phase value.

In an embodiment of the present disclosure, the terminal device may measure respective first positioning signals to obtain carrier phase values of the respective first positioning signals.

In step 303, a measurement report is reported to a core network device, in which the measurement report includes the measurement result.

In an embodiment of the present disclosure, the terminal device may report the measurement report to the core network device.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 4 is a schematic flowchart of a reporting method provided in an embodiment of the present disclosure. The method is performed by a terminal device, and as shown in Fig. 4, the reporting method may include the following steps.

In step 401, at least one first positioning signal sent by a first TRP is received.

For a detailed introduction of step 401, please refer to the above embodiment description, which will not be repeated here.

In step 402, a second positioning signal sent by a second TRP is received.

In an embodiment of the present disclosure, the second TRP may serve as a reference TRP, and the second positioning signal may be PRS, SRS, or other reference signals used for positioning. The measurement value of the second positioning signal sent by the second TRP may be used to calculate the carrier phase difference or carrier phase relative value of the first positioning signal.

Based on this, when it is necessary to measure the carrier phase difference or carrier phase relative value of the first positioning signal, the second TRP may send the second positioning signal to the terminal device.

In step 403, the first positioning signal is measured to obtain a measurement result, in which the measurement result includes at least one of a first carrier phase measurement result, a Doppler parameter, or a second carrier phase measurement result, and the first carrier phase measurement result includes at least one of a carrier phase difference or a carrier phase relative value.

In an embodiment of the present disclosure, the terminal device may use method one to measure the carrier phase difference or carrier phase relative value of the first positioning signal, in which method one may include the following steps:
measuring the first positioning signal to obtain a first carrier phase value;
measuring the second positioning signal to obtain a second carrier phase value; and
taking a difference between the first carrier phase value and the second carrier phase value as the carrier phase difference or the carrier phase relative value of the first positioning signal.

In another embodiment of the present disclosure, the terminal device may use method two to measure the carrier phase difference or carrier phase relative value of the first positioning signal, in which method two may include the following steps:
determining time when the terminal device receives the first positioning signal as a first time point;
determining time when the terminal device receives the second positioning signal as a second time point; and
tailing a phase change value measured by the terminal device between the second time point and the first time point as the carrier phase difference or the carrier phase relative value of the first positioning signal. The phase change value measured by the terminal device between the second time point and the first time point mentioned above may be: the phase change value of the phase-locked loop measured by the terminal device between the second time point and the first time point.

From the above content, it can be seen that the terminal device may use method one and/or method two to calculate the carrier phase difference and carrier phase relative value.

In an embodiment of the present disclosure, the main difference between method one and method two is that:
For method one, since the carrier phase value obtained based on the positioning signal sent by TRP only contains the fractional part of the phase that is less than the entire cycle, both the first carrier phase value and the second carrier phase value should only contain the fractional part. Therefore, when calculating the difference between the first carrier phase value and the second carrier phase value in method one, the difference obtained should also only contain the fractional part, that is, the carrier phase difference or carrier phase relative value calculated using method one only contains the fractional part.

For method two, since it takes the phase change value during a certain period of time (i.e. from the second time point to the first time point) as the carrier phase difference or carrier phase relative value, and since the phase change value during a certain period of time may include integer number of phase cycles, or fractional part of the phase that is less than the entire cycle, or both integer and fractional parts, the carrier phase difference or carrier phase relative value calculated using method two may include at least one of the integer or fractional parts.

In step 404, a measurement report is reported to a core network device, in which the measurement report includes the measurement result.

In an embodiment of the present disclosure, the terminal device may report the measurement report to the core network device.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

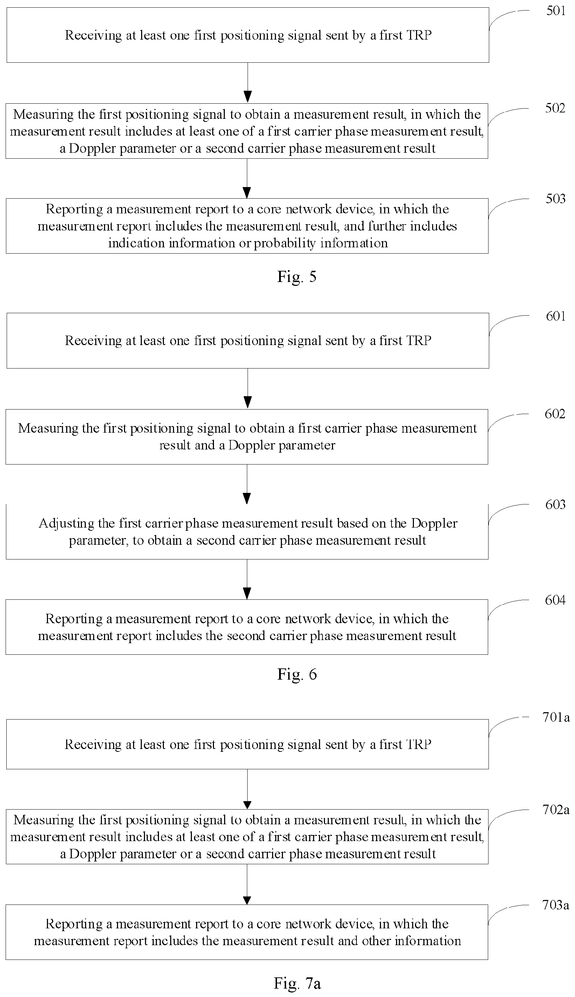

Fig. 5 is a schematic flowchart of a reporting method provided in an embodiment of the present disclosure. The method is performed by a terminal device, and as shown in Fig. 5, the reporting method may include the following steps.

In step 501, at least one first positioning signal sent by a first TRP is received.

For a detailed introduction of step 501, please refer to the above embodiment description, which will not be repeated here.

In step 502, the first positioning signal is measured to obtain a measurement result, in which the measurement result includes at least one of a first carrier phase measurement result, a Doppler parameter, or a second carrier phase measurement result.

It should be noted that when the first TRP sends the first positioning signal, the first positioning signal may be transmitted through multiple transmission paths. In an embodiment of the present disclosure, the first carrier phase measurement result may be obtained by measuring the first positioning signal on at least one designated path separately by the terminal device. The designated path may be any of the multiple transmission paths of the first positioning signal. By measuring the first positioning signal on one of the designated paths, a first carrier phase measurement result may be obtained, and measuring the first positioning signal on different designated paths may obtain different first carrier phase measurement results. By measuring the first positioning signal under different designated paths, different carrier phase values may be obtained.

In step 503, a measurement report is reported to a core network device, in which the measurement report includes the measurement result, and further includes indication information or probability information.

In an embodiment of the present disclosure, the terminal device may report the measurement report to the core network device.

In an embodiment of the present disclosure, the above indication information may be used to indicate whether the designated path corresponding to the first carrier phase measurement result or the second carrier phase measurement result is a line of sight. Specifically, the designated path corresponding to the second carrier phase measurement result may be the designated path corresponding to the first carrier phase measurement result before the corresponding adjustment of the second carrier phase measurement result. Specifically, the terminal device may autonomously determine whether the designated path corresponding to the first carrier phase measurement result or the second carrier phase measurement result is a line of sight, and then use indication information to represent the judgment result and report it to the core network device. In an embodiment of the present disclosure, the indication information may correspond one-to-one with the first carrier phase measurement result or with the second carrier phase measurement result, to indicate whether the designated path corresponding to the first carrier phase measurement result or the second carrier phase measurement result is a line of sight. For example, the indication information may be a one bit value. When the indication information is a first numerical value (such as 0), it is used to indicate that the designated path corresponding to the first carrier phase measurement result or the second carrier phase measurement result is a non line of sight; when the indication information is the second value (such as 1), it is used to indicate that the designated path corresponding to the first carrier phase measurement result or the second carrier phase measurement result is the line of sight, and vice versa.

Further, in an embodiment of the present disclosure, the probability information mentioned above may be used to represent the probability that the designated path corresponding to the first carrier phase measurement result or the second carrier phase measurement result is a line of sight. Specifically, the terminal device may autonomously determine the probability that the designated path corresponding to each first carrier phase measurement result or second carrier phase measurement result is a line of sight, and then report the determined probability to the core network device. In an embodiment of the present disclosure, the probability information may correspond one-to-one with the first carrier phase measurement result, or correspond one-to-one with the second carrier phase measurement result, to indicate the probability that the designated path corresponding to the first carrier phase measurement result or the second carrier phase measurement result is a lien of sight. For example, the probability information may be a one bit value. When the probability information is 0.8, it indicates that the probability of the designated path corresponding to the first carrier phase measurement result or the second carrier phase measurement result being a line of sight is 80%.

Moreover, it should be noted that, as stated above, both the indication information and the probability information correspond one-to-one with the first carrier phase measurement result or the second carrier phase measurement result. However, in an embodiment of the present disclosure, due to limitations in the capabilities of the terminal device, it may not be possible to report corresponding indication information and probability information for each first carrier phase measurement result or second carrier phase measurement result separately. Therefore, the number of indication information included in the measurement report reported by the terminal device should not exceed the maximum number of indication information for the designated path supported by the terminal device. Similarly, the number of probability information included in the measurement report reported by the terminal device should not exceed the maximum number of probability information for the designated path supported by the terminal device.

In addition, it should be noted that in an embodiment of the present disclosure, by including the above-mentioned indication information or probability information in the measurement report, the core network device may determine the relationship between the designated path of the first carrier phase measurement result or the second carrier phase measurement result and the line of sight based on the indication information or probability information (i.e. whether the designated path is the line of sight or the probability of being the line of sight). Subsequently, the core network device may refer to the relationship between the designated path and the line of sight when positioning based on the first carrier phase measurement result or the second carrier phase measurement result, thereby ensuring the accuracy of the carrier phase positioning method.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 6 is a schematic flowchart of a reporting method provided in an embodiment of the present disclosure. The method is performed by a terminal device, and as shown in Fig. 6, the reporting method may include the following steps.

In step 601, at least one first positioning signal sent by a first TRP is received.

In step 602, the first positioning signal is measured to obtain a first carrier phase measurement result and a Doppler parameter.

For a detailed introduction of steps 601-602, please refer to the above embodiment description, which will not be repeated here.

In step 603, the first carrier phase measurement result is adjusted based on the Doppler parameter, to obtain a second carrier phase measurement result.

In step 604, a measurement report is reported to a core network device, in which the measurement report includes the second carrier phase measurement result.

In an embodiment of the present disclosure, the terminal device may report the measurement report to the core network device.

In an embodiment of the present disclosure, the second carrier phase measurement result may include at least one of:
a carrier phase value after adjustment;
a carrier phase difference after adjustment; or
a carrier phase relative value after adjustment.

When the core network device receives the second carrier phase measurement result reported by the terminal device, it may directly perform positioning calculation based on the second carrier phase measurement result.

It should be noted that in an embodiment of the present disclosure, the second carrier phase measurement result may also include corresponding indication information or probability information as mentioned in the previous embodiments. The indication information may be used to indicate whether the designated path corresponding to the second carrier phase measurement result is a line of sight, and the probability information may be used to indicate the probability that the designated path corresponding to the second carrier phase measurement result is a line of sight. The designated path corresponding to the second carrier phase measurement result is the same as the designated path corresponding to the first carrier phase measurement result before adjustment. For other introductions regarding the indication information and probability information, please refer to the above embodiment description, which will not be repeated here.

In an embodiment of the present disclosure, by including the second carrier phase measurement result mentioned above in the measurement report, subsequently the core network device may directly use the second carrier phase measurement result for positioning, thereby ensuring the accuracy of the carrier phase positioning method in the subsequent positioning process of the core network device and simplifying the process.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, or terminal device may report at least one of the Doppler parameters, first carrier phase measurement results, and second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 7a is a schematic flowchart of a reporting method provided in an embodiment of the present disclosure. The method is performed by a terminal device, and as shown in Fig. 7a, the reporting method may include the following steps.

In step 701a, at least one first positioning signal sent by a first TRP is received.

In step 702a, the first positioning signal is measured to obtain a measurement result, in which the measurement result includes at least one of a first carrier phase measurement result, a Doppler parameter, and a second carrier phase measurement result.

For a detailed introduction of steps 701a-702a, please refer to the above embodiment description, which will not be repeated here.

In step 703a, a measurement report is reported to a core network device, in which the measurement report includes the measurement result and other information.

In an embodiment of the present disclosure, the terminal device may report the measurement report to the core network device.

In an embodiment of the present disclosure, the other information may include at least one of:
phase error group information corresponding to the first carrier phase measurement result;
phase error group information corresponding to the second carrier phase measurement result;
phase error group information corresponding to the Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a first TRP identification (ID);
a first positioning signal ID;
a positioning signal set ID of a positioning signal set to which the first positioning signal ID belongs;
a timestamp when the first carrier phase measurement result is measured; in which the timestamp is the measurement time point corresponding to the first carrier phase measurement result, that is, at which time point the first carrier phase measurement result was measured; when the first carrier phase measurement result is the carrier phase difference or carrier phase relative value, since these two are obtained by subtracting, the carrier phase difference or carrier phase relative value may correspond to one or two timestamps; when there are two timestamps, different timestamps correspond to different carrier phase values measured; and then, the difference between the carrier phase values measured at these two timestamps may be used to obtain the carrier phase difference or carrier phase relative value; or
a timestamp corresponding to the second carrier phase measurement result, in which the timestamp corresponding to the second carrier phase measurement result is the timestamp corresponding to the first carrier phase measurement result before adjustment.

Further, it should be noted that, the phase error group information may include at least one of transmitting phase error group information and receiving phase error group information, or may include transmitting/receiving phase error group information, and the above phase error group information may include a phase error group ID and/or a phase error value. In addition, in this embodiment, the goal of "improving the accuracy of carrier phase positioning method" may be achieved by enabling the terminal device to report phase error group information to the core network device. Specifically, the phase error group is mainly as follows. When the transmitting end sends a signal, the baseband needs to generate the signal first and then transmit it to the RF for transmission. During this period, the signal transmission may correspond to phase change, which is called phase error. Different RF frequencies correspond to different error groups, and different first carrier phase measurement results may be obtained under different error groups. After receiving the RF signal at the receiving end, the signal may be transmitted to the base station for processing. During this period, there may be phase changes in the signal transmission, resulting in phase errors. Different RF frequencies may correspond to different error groups, and different first carrier phase measurement results may be obtained under different error groups. Based on this, the terminal device reports the phase error group information to the core network device, and then the core network device may consider the error impact caused by different phase error groups based on the phase error group information when performing positioning calculation based on the first carrier phase measurement result and the Doppler parameter, thereby ensuring the accuracy of the carrier phase positioning method. Alternatively, the core network device may consider the error impact caused by the phase error group information corresponding to the first carrier phase measurement result before adjustment of the corresponding second carrier phase measurement result when subsequently performing positioning calculation based on the second carrier phase measurement result, thereby also ensuring the accuracy of the carrier phase positioning method.

Similarly, in an embodiment of the present disclosure, the antenna reference point information may include at least one of transmitting antenna reference point information and receiving antenna reference point information, or may include transmitting/receiving antenna reference point information, and the above antenna reference point information may include an antenna reference point ID and/or an error value of the antenna reference point. In addition, in this embodiment, the goal of "improving the accuracy of carrier phase positioning method" may be achieved by enabling the terminal device to report antenna reference point information to the core network device. Specifically, the antenna reference point information is mainly as follows. When the transmitting end sends a signal, the baseband needs to generate the signal first and then transmit it to the transmitting antenna for transmission. During this period, there may be a phase change in the signal transmission, which is called phase error. Different transmitting antennas may correspond to different error groups, and different first carrier phase measurement results may be obtained under different error groups. After the receiving antenna at the receiving end receives the signal, it may transmit the signal to the base station for processing. During this period, the signal transmission may also have phase change, resulting in phase error. Different receiving antennas may also correspond to different error groups, and different first carrier phase measurement results may be obtained under different error groups. Based on this, the terminal device reports the antenna reference point information to the core network device, and then the core network device may consider the error impact caused by different antenna reference points (i.e. different transmitting and/or receiving antennas) based on the antenna reference point information when performing positioning calculation based on the first carrier phase measurement result and Doppler parameter, or based on the second carrier phase measurement result, thereby ensuring the accuracy of the carrier phase positioning method. Alternatively, the core network device may consider the error impact caused by the antenna reference point information corresponding to the first carrier phase measurement result before adjustment of the corresponding second carrier phase measurement result when subsequently performing positioning calculation based on the second carrier phase measurement result, thereby also ensuring the accuracy of the carrier phase positioning method.

Further, in an embodiment of the present disclosure, the timing error group information may include at least one of transmitting timing error group information or receiving timing error group information, or may include transmitting/ receiving timing error group information, and the above timing error group information may include timing error group ID and/or timing error value. Furthermore, when the terminal device reports the timing error group information to the core network device, the core network device may consider the error impact caused by different timing errors based on the timing error group information when subsequently performing positioning calculation based on the first carrier phase measurement result and Doppler parameter, or based on the second carrier phase measurement result, thereby further ensuring the accuracy of the carrier phase positioning method. Alternatively, the core network equipment may consider the error impact caused by the timing error group information corresponding to the first carrier phase measurement result before adjustment of the corresponding second carrier phase measurement result when subsequently performing positioning calculation based on the second carrier phase measurement result, thereby also ensuring the accuracy of the carrier phase positioning method.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

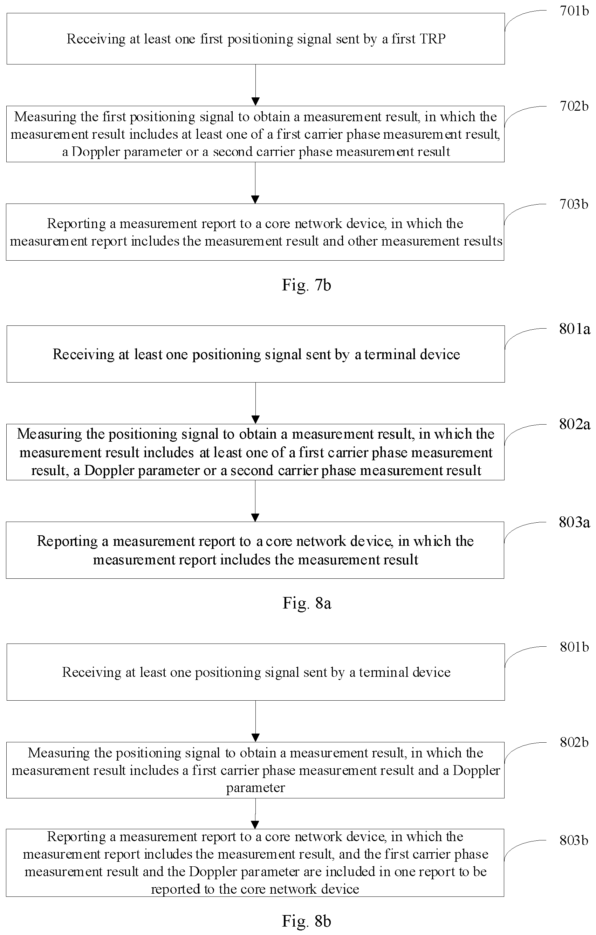

Fig. 7b is a schematic flowchart of a reporting method provided in an embodiment of the present disclosure. The method is performed by a terminal device, and as shown in Fig. 7b, the reporting method may include the following steps.

In step 701b, at least one first positioning signal sent by a first TRP is received.

In step 702b, the first positioning signal is measured to obtain a measurement result, in which the measurement result includes at least one of a first carrier phase measurement result, a Doppler parameter, or a second carrier phase measurement result.

For a detailed introduction of steps 701b-702b, please refer to the above embodiment description, which will not be repeated here.

In step 703b, a measurement report is reported to a core network device, in which the measurement report includes the measurement result mentioned above and other measurement results.

In an embodiment of the present disclosure, the terminal device may report the measurement report to the core network device.

In an embodiment of the present disclosure, the other measurement results may include at least one of:
a signal receiving power (RSRP) of the first positioning signal;
timing error group information corresponding to the RSRP of the first positioning signal;
an angle of arrival (AoA) of the first positioning signal;
timing error group information corresponding to the AoA of the first positioning signal;
an angle of departure (AoD) of the first positioning signal;
timing error group information corresponding to the AoD of the first positioning signal;
time of arrival (ToA) of the first positioning signal;
timing error group information corresponding to the ToA of the first positioning signal;
a time difference of arrival (TDoA) of the first positioning signal;
timing error group information corresponding to the TDoA of the first positioning signal;
round trip time (RTT) of the first positioning signal; or
timing error group information corresponding to the RTT of the first positioning signal.

For the timing error group information, please refer to the description in the previous embodiments.

In an embodiment of the present disclosure, by including the other measurement results mentioned above in the measurement report, rich parameter information may be provided to the core network device to ensure the accuracy of the carrier phase positioning method in the subsequent positioning process of the core network device.

In summary, in the reporting method provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 8a is a schematic flowchart of a reporting method provided in an embodiment of the present disclosure. The method is performed by a TRP, and as shown in Fig. 8a, the reporting method may include the following steps.

In step 801a, at least one positioning signal sent by a terminal device is received.

For relevant introduction about the positioning signal, please refer to the introduction of the first positioning signal in the above embodiments.

In step 802a, the positioning signal is measured to obtain a measurement result, in which the measurement result includes at least one of a first carrier phase measurement result, a Doppler parameter, or a second carrier phase measurement result.

In step 803a, a measurement report is reported to a core network device, in which the measurement report includes the measurement result.

For the detailed introduction of steps 801a-803a, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

Fig. 8b is a schematic flowchart of a reporting method provided in an embodiment of the present disclosure. The method is performed by a TRP, and as shown in Fig. 8b, the reporting method may include the following steps.

In step 801b, at least one positioning signal sent by a terminal device is received.

For relevant introduction about the positioning signal, please refer to the introduction of the first positioning signal in the above embodiments.

In step 802b, the positioning signal is measured to obtain a measurement result, in which the measurement result includes a first carrier phase measurement result and a Doppler parameter.

In step 803b, a measurement report is reported to a core network device, in which the measurement report includes the measurement result, and the first carrier phase measurement result and the Doppler parameter are included in one report to be reported to the core network device.

For the detailed introduction of steps 801b-803b, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

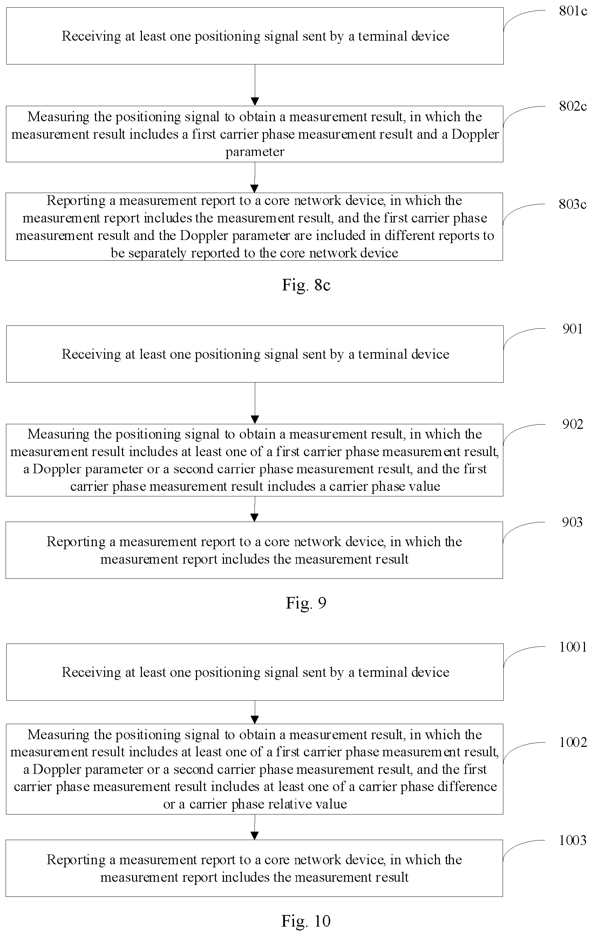

Fig. 8c is a schematic flowchart of a reporting method provided in an embodiment of the present disclosure. The method is performed by a TRP, and as shown in Fig. 8c, the reporting method may include the following steps.

In step 801c, at least one positioning signal sent by a terminal device is received.

For relevant introduction about the positioning signal, please refer to the introduction of the first positioning signal in the above embodiments.

In step 802c, the positioning signal is measured to obtain a measurement result, in which the measurement result includes a first carrier phase measurement result and a Doppler parameter.

In step 803c, measurement reports are reported to a core network device, in which the measurement report includes the measurement result, and the first carrier phase measurement result and the Doppler parameter are included in different reports to be separately reported to the core network device.

For the detailed introduction of steps 801c-803c, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

Fig. 9 is a schematic flowchart of a reporting method provided in an embodiment of the present disclosure. The method is performed by a TRP, and as shown in Fig. 9, the reporting method may include the following steps.

In step 901, at least one positioning signal sent by a terminal device is received.

In step 902, the positioning signal is measured to obtain a measurement result, in which the measurement result includes at least one of a first carrier phase measurement result, a Doppler parameter, or a second carrier phase measurement result, and the first carrier phase measurement result includes carrier phase value.

In an embodiment of the present disclosure, the TRP may measure respective positioning signals to obtain the carrier phase values of the respective positioning signals.

In step 903, a measurement report is reported to a core network device, in which the measurement report includes the measurement result.

For the detailed introduction of steps 901-903, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

Fig. 10 is a schematic flowchart of a reporting method provided in an embodiment of the present disclosure. The method is performed by a TRP, and as shown in Fig. 10, the reporting method may include the following steps.

In step 1001, at least one positioning signal sent by a terminal device is received.

In step 1002, the positioning signal is measured to obtain a measurement result, in which the measurement result includes at least one of a first carrier phase measurement result, a Doppler parameter, or a second carrier phase measurement result, and the first carrier phase measurement result includes at least one of carrier phase difference or carrier phase relative value.

In an embodiment of the present disclosure, TRP may use method a to measure the carrier phase difference or carrier phase relative value of the positioning signal, where method a may include the following steps:
measuring the positioning signal to obtain a measured carrier phase value;
determining a reference carrier phase value, which may be specified in the protocol, indicated by the base station, or indicated by the core network device (such as Location Management Function (LMF));
taking a difference between the measured carrier phase value and the reference carrier phase value as the carrier phase difference or carrier phase relative value of the positioning signal.

In another embodiment of the present disclosure, the TRP may use method b to measure the carrier phase difference or carrier phase relative value of the positioning signal, where method b may include the following steps:
determining a reference time point, which may be specified in the protocol, indicated by the base station, or indicated by the core network device (such as LMF);
determining time when the terminal device receives the positioning signal as an end time point; and
taking a phase change value measured by the terminal device between the reference time point and the end time point as the carrier phase difference or carrier phase relative value of the positioning signal. For example, the phase change value measured by the terminal device between the reference time point and the end time point mentioned above may be the phase change value of the phase-locked loop measured by the terminal device between the reference time point and the end time point.

From the above content, it can be seen that the terminal device may use method a and/or method b to calculate the carrier phase difference and carrier phase relative value. The main difference between method a and method b is the following

For method a, since the carrier phase value obtained based on the positioning signal sent by the terminal device only contains the fractional part of the phase that is less than the entire cycle, both the first carrier phase value and the second carrier phase value should only contain the fractional part. Therefore, when calculating the difference between the first carrier phase value and the second carrier phase value in method a, the difference obtained should also only contain the fractional part, that is, the carrier phase difference or carrier phase relative value calculated using method a only contains the fractional part.

For method b, since it takes the phase change value during a certain period of time (i.e. from the second time point to the first time point) as the carrier phase difference or carrier phase relative value, and since the phase change value during a certain period of time may include integer number of phase cycles, or fractional part of the phase that is less than the entire cycle, or both integer and fractional parts, the carrier phase difference or carrier phase relative value calculated using method b may include at least one of the integer or fractional parts.

In step 1003, a measurement report is reported to a core network device, in which the measurement report includes the measurement result.

For the detailed introduction of steps 1001-1003, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

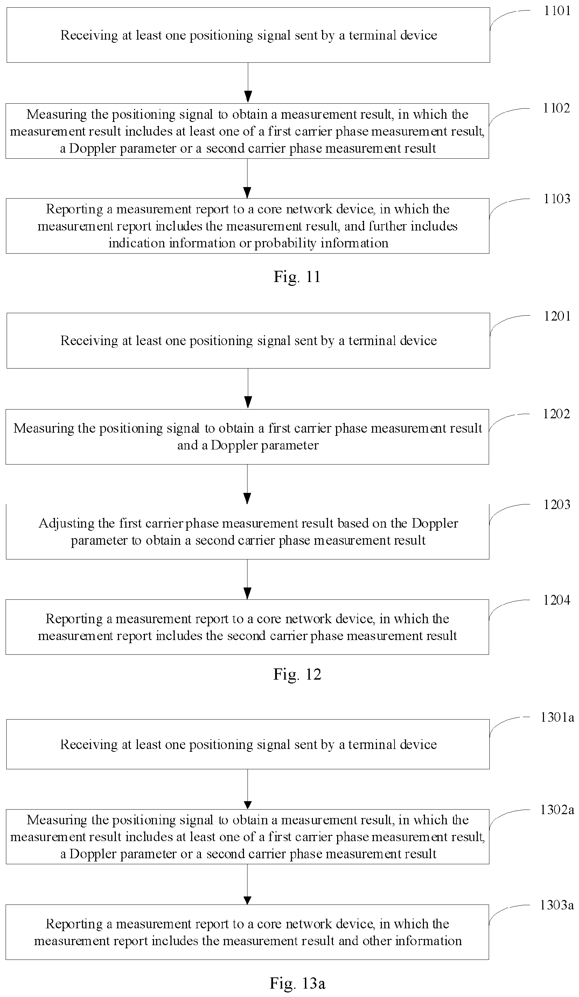

Fig. 11 is a schematic flowchart of a reporting method provided in an embodiment of the present disclosure. The method is performed by a TRP, and as shown in Fig. 11, the reporting method may include the following steps.

In step 1101, at least one positioning signal sent by a terminal device is received.

In step 1102, the positioning signal is measured to obtain a measurement result, in which the measurement result includes at least one of a first carrier phase measurement result, a Doppler parameter, or a second carrier phase measurement result.

In step 1103, a measurement report is reported to a core network device, in which the measurement report includes the measurement result, and further includes indication information or probability information.

For the detailed introduction of steps 1101-1103, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

Fig. 12 is a schematic flowchart of a reporting method provided in an embodiment of the present disclosure. The method is performed by a TRP, and as shown in Fig. 12, the reporting method may include the following steps.

In step 1201, at least one positioning signal sent by a terminal device is received.

In step 1202, the positioning signal is measured to obtain a first carrier phase measurement result and a Doppler parameter.

In step 1203, the first carrier phase measurement result is adjusted based on the Doppler parameter to obtain a second carrier phase measurement result.

In step 1203, a measurement report is reported to a core network device, in which the measurement report includes the second carrier phase measurement result.

For the detailed introduction of steps 1201-1203, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

Fig. 13a is a schematic flowchart of a reporting method provided in an embodiment of the present disclosure. The method is performed by a TRP, and as shown in Fig. 13a, the reporting method may include the following steps.

In step 1301a, at least one positioning signal sent by a terminal device is received.

In step 1302a, the positioning signal is measured to obtain a measurement result, in which the measurement result includes at least one of a first carrier phase measurement result, a Doppler parameter or a second carrier phase measurement result.

In step 1303a, a measurement report is reported to a core network device, in which the measurement report includes the measurement result above and other information.

In an embodiment of the present disclosure, the other information may include at least one of:
phase error group information corresponding to the first carrier phase measurement result;
phase error group information corresponding to the second carrier phase measurement result;
phase error group information corresponding to Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a TRP ID;
a positioning signal ID;
a positioning signal set ID of a positioning signal set to which the positioning signal ID belongs;
a timestamp when the first carrier phase measurement result is measured; or
a timestamp corresponding to the second carrier phase measurement result.

For the detailed introduction of steps 1301a-1303a, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

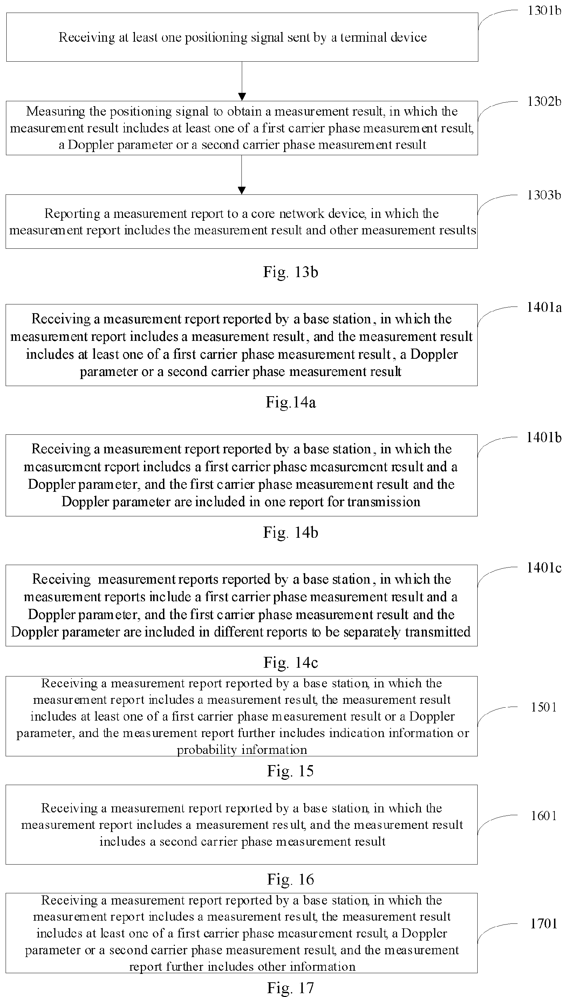

Fig. 13b is a schematic flowchart of a reporting method provided in an embodiment of the present disclosure. The method is performed by a TRP, and as shown in Fig. 13b, the reporting method may include the following steps.

In step 1301b, at least one positioning signal sent by a terminal device is received.

In step 1302b, the positioning signal is measured to obtain a measurement result, in which the measurement result includes at least one of a first carrier phase measurement result, a Doppler parameter, or a second carrier phase measurement result.

In step 1303b, a measurement report is reported to a core network device, in which the measurement report includes the measurement result above and other measurement results.

In an embodiment of the present disclosure, the other measurement results may include at least one of:
an RSRP of the first positioning signal;
timing error group information corresponding to the RSRP of the first positioning signal;
an AoA of the first positioning signal;
timing error group information corresponding to the AoA of the first positioning signal;
an AoD of the first positioning signal;
timing error group information corresponding to the AoD of the first positioning signal;
ToA of the first positioning signal;
timing error group information corresponding to the ToA of the first positioning signal;
a TDoA of the first positioning signal;
timing error group information corresponding to the TDoA of the first positioning signal;
RTT of the first positioning signal; or
timing error group information corresponding to the RTT of the first positioning signal.

For the detailed introduction of steps 1301b-1303b, please refer to the description in the above embodiments, which will not be repeated here.

In summary, in the reporting method provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

Fig. 14a is a schematic flowchart of a reporting method provided in an embodiment of the present disclosure. The method is performed by a core network device, and as shown in Fig. 14a, the reporting method may include the following steps.

In step 1401a, a measurement report reported by a base station is received, in which the measurement report includes a measurement result, and the measurement result includes at least one of a first carrier phase measurement result, a Doppler parameter, or a second carrier phase measurement result.

In an embodiment of the present disclosure, after receiving the measurement result, the core network device may first adjust the first carrier phase measurement result based on the Doppler parameter to obtain the second carrier phase measurement result, and then perform positioning based on the second carrier phase measurement result, thereby ensuring the accuracy of the carrier phase positioning method. Alternatively, when the measurement result includes the second carrier phase measurement result, the second carrier phase measurement result may be directly used for positioning.

For the detailed introduction of step 1401a, please refer to the description in the above embodiments, which will not be repeated here.

In summary, in the reporting method provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 14b is a schematic flowchart of a reporting method provided in an embodiment of the present disclosure. The method is performed by a core network device, and as shown in Fig. 14b, the reporting method may include the following steps.

In step 1401b, a measurement report reported by a base station is received, in which the measurement report includes a first carrier phase measurement result and a Doppler parameter, in which the first carrier phase measurement result and the Doppler parameter are included in one report for transmission.

For the detailed introduction of steps 1401b, please refer to the description in the above embodiments, which will not be repeated here.

In summary, in the reporting method provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 14c is a schematic flowchart of a reporting method provided in an embodiment of the present disclosure. The method is performed by a core network device, and as shown in Fig. 14c, the reporting method may include the following steps.

In step 1401c, measurement reports reported by a base station are received, in which the measurement reports include a first phase carrier measurement result and a Doppler parameter, in which the first carrier phase measurement result and the Doppler parameter are included in different reports to be separately transmitted.

For the detailed introduction of steps 1401c, please refer to the description in the above embodiments, which will not be repeated here.

In summary, in the reporting method provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 15 is a schematic flowchart of a reporting method provided in an embodiment of the present disclosure. The method is performed by a core network device, and as shown in Fig. 15, the reporting method may include the following steps.

In step 1501, a measurement report reported by a base station is received, in which the measurement report includes a measurement result, and the measurement result includes at least one of a first carrier phase measurement result or a Doppler parameter, and further includes indication information or probability information.

For the detailed introduction of steps 1501, please refer to the description in the above embodiments, which will not be repeated here.

In summary, in the reporting method provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP will report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 16 is a schematic flowchart of a reporting method provided in an embodiment of the present disclosure. The method is performed by a core network device, and as shown in Fig. 16, the reporting method may include the following steps.

In step 1601, a measurement report reported by a base station is received, in which the measurement report includes a measurement result, and the measurement result includes a second carrier phase measurement result.

For the detailed introduction of steps 1601, please refer to the description in the above embodiments, which will not be repeated here.

In summary, in the reporting method provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 17 is a schematic flowchart of a reporting method provided in an embodiment of the present disclosure. The method is performed by a core network device, and as shown in Fig. 17, the reporting method may include the following steps.

In step 1701, a measurement report reported by a base station is received, in which the measurement report includes a measurement result, the measurement result includes at least one of a first carrier phase measurement result, a Doppler parameter or a second carrier phase measurement result, and the measurement report further includes other information.

The other information may include at least one of:
phase error group information corresponding to the first carrier phase measurement result;
phase error group information corresponding to the second carrier phase measurement result;
phase error group information corresponding to Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a TRP ID;
a positioning signal ID;
a positioning signal set ID of a positioning signal set to which the positioning signal ID belongs;
a timestamp when the first carrier phase measurement result is measured; or
a timestamp corresponding to the second carrier phase measurement result.

For the detailed introduction of steps 1701, please refer to the description in the above embodiments, which will not be repeated here.

In summary, in the reporting method provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

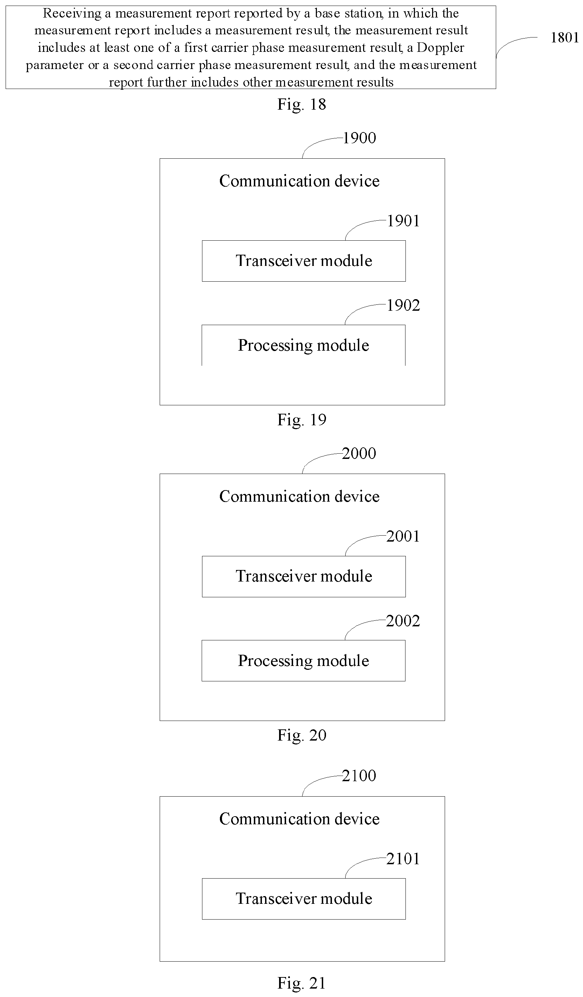

Fig. 18 is a schematic flowchart of a reporting method provided in an embodiment of the present disclosure. The method is performed by a core network device, and as shown in Fig. 18, the reporting method may include the following steps.

In step 1801, a measurement report reported by a base station is received, in which the measurement report includes a measurement result, the measurement result includes at least one of a first carrier phase measurement result or a Doppler parameter, and the measurement report further includes other measurement results.

The other measurement results may include at least one of:
an RSRP of the first positioning signal;
timing error group information corresponding to the RSRP of the first positioning signal;
an AoA of the first positioning signal;
timing error group information corresponding to the AoA of the first positioning signal;
an AoD of the first positioning signal;
timing error group information corresponding to the AoD of the first positioning signal;
ToA of the first positioning signal;
timing error group information corresponding to the ToA of the first positioning signal;
a TDoA of the first positioning signal;
timing error group information corresponding to the TDoA of the first positioning signal;
RTT of the first positioning signal; or
timing error group information corresponding to the RTT of the first positioning signal.

For the detailed introduction of step 1801, please refer to the description in the above embodiments, which will not be repeated here.

In summary, in the reporting method provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Fig. 19 is a block diagram of a communication device provided in an embodiment of the present disclosure. As shown in Fig. 19, the communication device may include:
a transceiver module 1901, configured to receive at least one first positioning signal sent by a first TRP; and
a processing module 1902, configured to measure the first positioning signal to obtain a measurement result, in which the measurement result includes at least one of a first carrier phase measurement result, a Doppler parameter, or a second carrier phase measurement result, in which the second carrier phase measurement result is obtained by adjusting the first carrier phase measurement result based on the Doppler parameter.

The transceiver module 1901 is further configured to report a measurement report to a core network device, in which the measurement report includes the measurement result.

In summary, in the communication device provided in an embodiment of the present disclosure, the terminal device receives at least one first positioning signal sent by the first TRP, measures the first positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, the terminal device may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Optionally, in an embodiment of the present disclosure, the first carrier phase measurement result includes at least one of:
a carrier phase value;
a carrier phase difference; or
a carrier phase relative value.

Optionally, in an embodiment of the present disclosure, the Doppler parameter includes at least one of:
a Doppler frequency offset; or
a Doppler spread.

Optionally, in an embodiment of the present disclosure, the second carrier phase measurement result includes at least one of:
a carrier phase value adjusted based on the Doppler parameter;
a carrier phase difference adjusted based on the Doppler parameter; or
a carrier phase relative value adjusted based on the Doppler parameter.

Optionally, in an embodiment of the present disclosure, the processing module is further configured to:
measure respective first positioning signals to obtain carrier phase values corresponding to the respective first positioning signals.

Optionally, in an embodiment of the present disclosure, before measuring the first positioning signal to obtain the measurement result, the device is further configured to:
receive a second positioning signal sent by a second TRP, in which the second TRP is a reference TRP.

Optionally, in an embodiment of the present disclosure, the processing module is further configured to:
measure the first positioning signal to obtain a first carrier phase value;
measure the second positioning signal to obtain a second carrier phase value; and
take a difference between the first carrier phase value and the second carrier phase value as the carrier phase difference or carrier phase relative value of the first positioning signal.

Optionally, in an embodiment of the present disclosure, the processing module is further configured to:
determine time when the terminal device receives the first positioning signal as a first time point;
determine time when the terminal device receives the second positioning signal as a second time point; and
determine a phase change value measured by the terminal device between the second time point and the first time point as the carrier phase difference or carrier phase relative value of the first positioning signal.

Optionally, in an embodiment of the present disclosure, the first carrier phase measurement result is obtained by measuring the first positioning signal separately on at least one designated path;
the measurement report further includes any of:
indication information, configured to indicate whether the designated path corresponding to the first carrier phase measurement result or the second carrier phase measurement result is a line of sight;
probability information, configured to represent a probability that the designated path corresponding to the first carrier phase measurement result or the second carrier phase measurement result is a line of sight.

Optionally, in an embodiment of the present disclosure, the measurement report further includes at least one of:
phase error group information corresponding to the first carrier phase measurement result;
phase error group information corresponding to the second carrier phase measurement result;
phase error group information corresponding to Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a first TRP ID;
a first positioning signal ID;
a positioning signal set ID of a positioning signal set to which the first positioning signal ID belongs;
a timestamp when the first carrier phase measurement result is measured; or
a timestamp corresponding to the second carrier phase measurement result.

Optionally, in an embodiment of the present disclosure, the measurement report further includes at least one of:
an RSRP of the first positioning signal;
timing error group information corresponding to the RSRP of the first positioning signal;
an AoA of the first positioning signal;
timing error group information corresponding to the AoA of the first positioning signal;
an AoD of the first positioning signal;
timing error group information corresponding to the AoD of the first positioning signal;
ToA of the first positioning signal;
timing error group information corresponding to the ToA of the first positioning signal;
a TDoA of the first positioning signal;
timing error group information corresponding to the TDoA of the first positioning signal;
RTT of the first positioning signal; or
timing error group information corresponding to the RTT of the first positioning signal.

Optionally, in an embodiment of the present disclosure,
the phase error group information includes at least one of transmitting phase error group information and receiving phase error group information; or,
the phase error group information includes transmitting/receiving phase error group information.

Optionally, in an embodiment of the present disclosure,
the antenna reference point information includes at least one of transmitting antenna reference point information or receiving antenna reference point information; or
the antenna reference point information includes transmitting/receiving antenna reference point information.

Optionally, in an embodiment of the present disclosure,
the timing error group information includes at least one of transmitting timing error group information or receiving timing error group information; or,
the timing error group information includes transmitting/ receiving timing error group information.

Fig. 20 is a block diagram of a communication device provided in an embodiment of the present disclosure. As shown in Fig. 20, the device may include:
a transceiver module 2001, configured to receive at least one positioning signal sent by a terminal device; and
a processing module 2002, configured to measure the positioning signal to obtain a measurement result, in which the measurement result includes at least one of a first carrier phase measurement result, a Doppler parameter, or a second carrier phase measurement result, in which the second carrier phase measurement result is obtained by adjusting the first carrier phase measurement result based on the Doppler parameter;
the transceiver module 2001 is configured to report a measurement result to a core network device, in which the measurement report includes the measurement result.

In summary, in the communication device provided in an embodiment of the present disclosure, the TRP receives at least one positioning signal sent by the terminal device, measures the positioning signal to obtain a measurement result, and reports a measurement report to the core network device, the measurement report including the measurement result, which includes at least one of the first carrier phase measurement result, Doppler parameter, or second carrier phase measurement result. From this, it can be seen that in embodiments of the present disclosure, TRP may report at least one of the Doppler parameters, the first carrier phase measurement results, or second carrier phase measurement results corresponding to the measurement of respective positioning signals to the core network device, so that the core network device may subsequently perform positioning based on the second carrier phase measurement results (i.e., the measurement results adjusted according to the Doppler effect), thereby ensuring the accuracy of the carrier phase positioning method.

Optionally, in an embodiment of the present disclosure, the first carrier phase measurement result includes at least one of:
a carrier phase value;
a carrier phase difference; or
a carrier phase relative value.

Optionally, in an embodiment of the present disclosure, the Doppler parameter includes at least one of:
a Doppler frequency offset; or
a Doppler spread.

Optionally, in an embodiment of the present disclosure, the second carrier phase measurement result includes at least one of:
a carrier phase value adjusted based on the Doppler parameter;
a carrier phase difference adjusted based on the Doppler parameter; or
a carrier phase relative value adjusted based on the Doppler parameter.

Optionally, in an embodiment of the present disclosure, the processing module is further configured to:
measure respective positioning signals to obtain carrier phase values corresponding to the respective positioning signals.

Optionally, the processing module is further configured to:
measure the positioning signal to obtain a measured carrier phase value;
determine a reference carrier phase value; and
take a difference between the measured carrier phase value and the reference carrier phase value as the carrier phase difference or carrier phase relative value of the positioning signal.

Optionally, in an embodiment of the present disclosure, the processing module is further configured to:
determine a reference time point;
determine time when the terminal device receives the positioning signal as an end time point; and
determine a phase change value measured by the terminal device between the reference time point and the end time point as the carrier phase difference or carrier phase relative value of the positioning signal.

Optionally, in an embodiment of the present disclosure, the first carrier phase measurement result is obtained by measuring the first positioning signal separately on at least one designated path;
the measurement report further includes any of:
indication information, configured to indicate whether the designated path corresponding to the first carrier phase measurement result or the second carrier phase measurement result is a line of sight;
probability information, configured to represent a probability that the designated path corresponding to the first carrier phase measurement result or the second carrier phase measurement result is a line of sight.

Optionally, in an embodiment of the present disclosure, the measurement report further includes at least one of:
phase error group information corresponding to the first carrier phase measurement result;
phase error group information corresponding to the second carrier phase measurement result;
phase error group information corresponding to the Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a TRP ID;
a positioning signal ID;
a positioning signal set ID of a positioning signal set to which the positioning signal ID belongs;
a timestamp when the first carrier phase measurement result is measured; or
a timestamp corresponding to the second carrier phase measurement result.

Optionally, in an embodiment of the present disclosure, the measurement report further includes at least one of:
an RSRP of the first positioning signal;
timing error group information corresponding to the RSRP of the first positioning signal;
an AoA of the first positioning signal;
timing error group information corresponding to the AoA of the first positioning signal;
an AoD of the first positioning signal;
timing error group information corresponding to the AoD of the first positioning signal;
ToA of the first positioning signal;
timing error group information corresponding to the ToA of the first positioning signal;
a TDoA of the first positioning signal;
timing error group information corresponding to the TDoA of the first positioning signal;
RTT of the first positioning signal; or
timing error group information corresponding to the RTT of the first positioning signal.

Optionally, in an embodiment of the present disclosure,
the phase error group information includes at least one of transmitting phase error group information or receiving phase error group information; or,
the phase error group information includes transmitting/receiving phase error group information.

Optionally, in an embodiment of the present disclosure,
the antenna reference point information includes at least one of transmitting antenna reference point information or receiving antenna reference point information; or
the antenna reference point information includes transmitting/receiving antenna reference point information.

Optionally, in an embodiment of the present disclosure,
the timing error group information includes at least one of transmitting timing error group information or receiving timing error group information; or,
the timing error group information includes transmitting/ receiving timing error group information.

Fig. 21 is a block diagram of a communication device provided in an embodiment of the present disclosure. As shown in Fig. 21, the device may include:
a transceiver module 2101, configured to receive a measurement report reported by a base station, in which the measurement report includes at least one of a first carrier phase measurement result, a Doppler parameter, or a second carrier phase measurement result, in which the second carrier phase measurement result is obtained by adjusting the first carrier phase measurement result based on the Doppler parameter.

In summary, in the communication device provided in an embodiment of the present disclosure, the core network device receives the measurement report reported by the base station, which includes the measurement result, including at least one of the first carrier phase measurement result, Doppler parameter, or second carrier phase measurement result. From this, it can be seen that in embodiments of the present disclosure, the terminal device and/or TRP may report at least one of the Doppler parameters, first carrier phase measurement results, or second carrier phase measurement results corresponding to the measurement of respective first positioning signals to the core network device, so that the core network device may subsequently perform positioning based on the second carrier phase measurement results (i.e., measurement results adjusted according to the Doppler effect), thereby ensuring the accuracy of the carrier phase positioning method.

Optionally, in an embodiment of the present disclosure, the first carrier phase measurement result includes at least one of:
a carrier phase value;
a carrier phase difference; or
a carrier phase relative value.

Optionally, in an embodiment of the present disclosure, the Doppler parameter includes at least one of:
a Doppler frequency offset; or
a Doppler spread.

Optionally, in an embodiment of the present disclosure, the second carrier phase measurement result includes at least one of:
a carrier phase value adjusted based on the Doppler parameter;
a carrier phase difference adjusted based on the Doppler parameter; or
a carrier phase relative value adjusted based on the Doppler parameter.

Optionally, in an embodiment of the present disclosure, the first carrier phase measurement result is obtained by measuring the first positioning signal separately on at least one designated path;
the measurement report further includes any of:
indication information, configured to indicate whether the designated path corresponding to the first carrier phase measurement result is a line of sight;
probability information, configured to represent a probability that the designated path corresponding to the first carrier phase measurement result is a line of sight.

Optionally, in an embodiment of the present disclosure, the measurement report further includes at least one of:
phase error group information corresponding to the first carrier phase measurement result;
phase error group information corresponding to the second carrier phase measurement result;
phase error group information corresponding to Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a TRP ID;
a positioning signal ID;
a positioning signal set ID of a positioning signal set to which the positioning signal ID belongs;
a timestamp when the first carrier phase measurement result is measured; or
a timestamp corresponding to the second carrier phase measurement result.

Optionally, in an embodiment of the present disclosure, the measurement report further includes at least one of:
an RSRP of the first positioning signal;
timing error group information corresponding to the RSRP of the first positioning signal;
an AoA of the first positioning signal;
timing error group information corresponding to the AoA of the first positioning signal;
an AoD of the first positioning signal;
timing error group information corresponding to the AoD of the first positioning signal;
ToA of the first positioning signal;
timing error group information corresponding to the ToA of the first positioning signal;
a TDoA of the first positioning signal;
timing error group information corresponding to the TDoA of the first positioning signal;
RTT of the first positioning signal; or
timing error group information corresponding to the RTT of the first positioning signal.

Optionally, in an embodiment of the present disclosure,
the phase error group information includes at least one of transmitting phase error group information or receiving phase error group information; or,
the phase error group information includes transmitting/receiving phase error group information.

Optionally, in an embodiment of the present disclosure,
the antenna reference point information includes at least one of transmitting antenna reference point information or receiving antenna reference point information; or
the antenna reference point information includes transmitting/receiving antenna reference point information.

Optionally, in an embodiment of the present disclosure,
the timing error group information includes at least one of transmitting timing error group information or receiving timing error group information; or,
the timing error group information includes transmitting/receiving timing error group information.

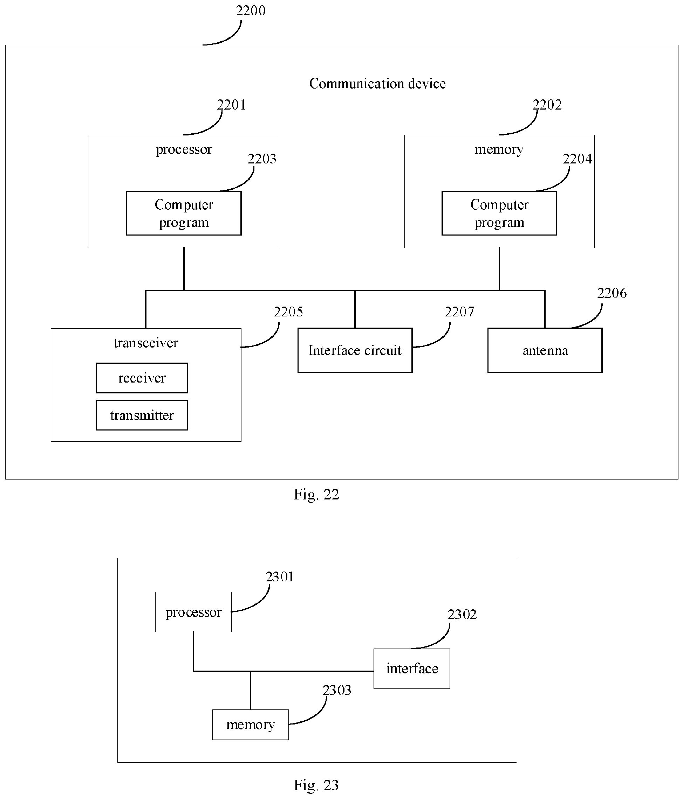

Please refer to Fig. 22, which is a block diagram of a communication device 2200 provided in an embodiment of the present disclosure. The communication device 2200 may be a network device, or may be a terminal device, or may be a chip, a chip system, or a processor that supports the network device to implement the above methods, or may be a chip, a chip system, or a processor that supports the terminal device to implement the above methods. This device can be configured to implement the methods described in the above method embodiments, which can be referred to in the description of the above method embodiments.

The communication device 2200 may include one or more processors 2201. The processor 2201 may be a general-purpose processor or a dedicated processor, etc. For example, it may be a baseband processor or a central processing unit. The baseband processor can be configured to process communication protocols and communication data, while the central processor can be configured to control communication devices (such as base stations, baseband chips, terminal devices, terminal device chips, DU or CU, etc.), execute computer programs, and process data from computer programs.

Optionally, the communication device 2200 may also include one or more memories 2202, on which computer programs 2204 may be stored. The processor 2201 is configured to execute the computer programs 2204 to enable the communication device 2200 to perform the methods described in the above method embodiments. Optionally, the memory 2202 may also be configured to store data. The communication device 2200 and the memory 2202 can be set separately or integrated together.

Optionally, the communication device 2200 may also include a transceiver 2205 and an antenna 2206. The transceiver 2205 can be referred to as a transceiver unit, transceiver machine, or transceiver circuit, etc., used to achieve transceiver functions. The transceiver 2205 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 2200 may also include one or more interface circuits 2207. The interface circuit 2207 is configured to receive code instructions and transmit them to the processor 2201. The processor 2201 executes the code instructions to cause the communication device 2200 to perform the method described in the above method embodiments.

The communication device 2200 is a terminal device: the transceiver 2205 is configured to execute steps 201 and 203 in Fig. 2; steps 301 and 303 in Fig. 3; steps 401, 402 and 404 in Fig. 4; steps 501 and 503 in Fig. 5; steps 601 and 604 in Fig. 6; steps 701a and 703a in Fig. 7a; steps 701b and 703b in Fig. 7b. The processor 2201 is configured to execute steps other than the above steps in Fig. 2 to Fig. 7b.

The communication device 2200 is a TRP: the transceiver 2205 is used to execute steps 801 and 803 in Fig. 8; steps 901 and 903 in Fig. 9; steps 1001 and 1003 in Fig. 10; steps 1101 and 1103 in Fig. 11; steps 1201 and 1203 in Fig. 12; steps 1301a and 1303a in Fig. 13a; steps 1301b and 1303b in Fig. 13b. The processor 2201 is used to execute steps other than the above steps in Fig. 8 to Fig. 13b.

The communication device 2200 is a network device: the transceiver 2205 is configured to execute steps in Fig. 14 to Fig. 18.

In one implementation, the processor 2201 may include a transceiver for implementing receiving and transmitting functions. For example, the transceiver can be a transceiver circuit, or an interface, or an interface circuit. The transceiver circuit, interface, or interface circuit configured to implement the receiving and sending functions can be separate or integrated together. The above-mentioned transceiver circuit, interface or interface circuit can be configured to read and write code/data, or the above-mentioned transceiver circuit, interface or interface circuit can be used for signal transmission or transfer.

In one implementation, the processor 2201 may store a computer program 2203 that runs on the processor 2201 and enables the communication device 2200 to perform the method described in the above method embodiments. The computer program 2203 may be fixed in the processor 2201, in which case the processor 2201 may be implemented by hardware.

In one implementation, the communication device 2200 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a network device or a terminal device, but the scope of the communication device described in this disclosure is not limited to this, and the structure of the communication device may not be limited by Fig. 22. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the communication device that can be a chip or chip system, reference can be made to the schematic diagram of the structure of the chip shown in Fig. 23. The chip shown in Fig. 23 includes processors 2301 and interfaces 2302. The number of processors 2301 can be one or more, and the number of interfaces 2302 can be multiple.

Optionally, the chip also includes a memory 2303 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, prestored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A reporting method, performed by a terminal device, comprising:
receiving at least one first positioning signal sent by a first transmission reception point (TRP);
measuring the first positioning signal to obtain a measurement result, wherein the measurement result comprises at least one of a first carrier phase measurement result, a Doppler parameter, or a second carrier phase measurement result, wherein the second carrier phase measurement result is obtained by adjusting the first carrier phase measurement result based on the Doppler parameter; and
reporting a measurement report to a core network device, wherein the measurement report comprises the measurement result.

2. The method of claim **1,** wherein the first carrier phase measurement result comprises at least one of:
a carrier phase value;
a carrier phase difference; and
a carrier phase relative value.

3. The method of claim 1, wherein the Doppler parameter comprises at least one of:
a Doppler frequency offset; or
a Doppler spread.

4. The method of claim 1, wherein the second carrier phase measurement result comprises at least one of:
a carrier phase value adjusted based on the Doppler parameter;
a carrier phase difference adjusted based on the Doppler parameter; or
a carrier phase relative value adjusted based on the Doppler parameter.

5. The method of claim 2, wherein measuring the first positioning signal to obtain the carrier phase value comprises:
measuring respective first positioning signals to obtain carrier phase values corresponding to the respective first positioning signals.

6. The method of claim 1 or 2, wherein before measuring the first positioning signal to obtain the measurement result, the method further comprises:
receiving a second positioning signal sent by a second TRP, wherein the second TRP is a reference TRP.

7. The method of claim 6, wherein measuring the first positioning signal to obtain the carrier phase difference or carrier phase relative value comprises:
measuring the first positioning signal to obtain a first carrier phase value;
measuring the second positioning signal to obtain a second carrier phase value; and
taking a difference between the first carrier phase value and the second carrier phase value as the carrier phase difference or carrier phase relative value of the first positioning signal.

8. The method of claim 6, wherein measuring the first positioning signal to obtain the carrier phase difference or carrier phase relative value comprises:
determining time when the terminal device receives the first positioning signal as a first time point;
determining time when the terminal device receives the second positioning signal as a second time point; and
determining a phase change value measured by the terminal device between the second time point and the first time point as the carrier phase difference or carrier phase relative value of the first positioning signal.

9. The method of claim 1, wherein the first carrier phase measurement result is obtained by measuring the first positioning signal separately on at least one designated path;
the measurement report further comprises any of:
indication information, configured to indicate whether the designated path corresponding to the first carrier phase measurement result or the second carrier phase measurement result is a line of sight; or
probability information, configured to represent a probability that the designated path corresponding to the first carrier phase measurement result or the second carrier phase measurement result is a line of sight.

10. The method of claim 1, wherein the measurement report further comprises at least one of:
phase error group information corresponding to the first carrier phase measurement result;
phase error group information corresponding to the second carrier phase measurement result;
phase error group information corresponding to the Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a first TRP identification (ID);
a first positioning signal ID;
a positioning signal set ID of a positioning signal set to which the first positioning signal ID belongs;
a timestamp when the first carrier phase measurement result is measured; or
a timestamp corresponding to the second carrier phase measurement result.

11. The method of claim 1, wherein the measurement report further comprises at least one of:
a reference signal receiving power (RSRP) of the first positioning signal;
timing error group information corresponding to the RSRP of the first positioning signal;
an angle of arrival (AoA) of the first positioning signal;
timing error group information corresponding to the AoA of the first positioning signal;
an angle of departure (AoD) of the first positioning signal;
timing error group information corresponding to the AoD of the first positioning signal;
time of arrival (ToA) of the first positioning signal;
timing error group information corresponding to the ToA of the first positioning signal;
a time difference of arrival (TDoA) of the first positioning signal;
timing error group information corresponding to the TDoA of the first positioning signal;
round trip time (RTT) of the first positioning signal; or
timing error group information corresponding to the RTT of the first positioning signal.

12. The method of claim 10, wherein
the phase error group information comprises at least one of transmitting phase error group information, or receiving phase error group information; or,
the phase error group information comprises transmitting/receiving phase error group information.

13. The method of claim 10, wherein
the antenna reference point information comprises at least one of transmitting antenna reference point information, or receiving antenna reference point information; or
the antenna reference point information comprises transmitting/receiving antenna reference point information.

14. The method of claim 10 or 11, wherein
the timing error group information comprises at least one of transmitting timing error group information or receiving timing error group information; or,
the timing error group information comprises transmitting/ receiving timing error group information.

15. A reporting method, performed by a base station, comprising:
receiving at least one positioning signal sent by a terminal device;
measuring the positioning signal to obtain a measurement result, wherein the measurement result comprises at least one of a first carrier phase measurement result, a Doppler parameter, or a second carrier phase measurement result, wherein the second carrier phase measurement result is obtained by adjusting the first carrier phase measurement result based on the Doppler parameter; and
reporting a measurement result to a core network device, wherein the measurement report comprises the measurement result.

16. The method of claim 15, wherein the first carrier phase measurement result comprises at least one of:
a carrier phase value;
a carrier phase difference; or
a carrier phase relative value.

17. The method of claim 15, wherein the Doppler parameter comprises at least one of:
a Doppler frequency offset; or
a Doppler spread.

18. The method of claim 15, wherein the second carrier phase measurement result comprises at least one of:
a carrier phase value adjusted based on the Doppler parameter;
a carrier phase difference adjusted based on the Doppler parameter; or
a carrier phase relative value adjusted based on the Doppler parameter.

19. The method of claim 16, wherein measuring the positioning signal to obtain the carrier phase value comprises:
measuring respective positioning signals to obtain carrier phase values corresponding to the respective positioning signals.

20. The method of claim 15 or 16, wherein measuring the positioning signal to obtain the carrier phase difference or carrier phase relative value comprises:
measuring the positioning signal to obtain a measured carrier phase value;
determining a reference carrier phase value; and
taking a difference between the measured carrier phase value and the reference carrier phase value as the carrier phase difference or carrier phase relative value of the positioning signal.

21. The method of claim 15 or 16, wherein measuring the positioning signal to obtain the carrier phase difference or carrier phase relative value comprises:
determining a reference time point;
determining time when the terminal device receives the positioning signal as an end time point; and
determining a phase change value measured by the terminal device between the reference time point and the end time point as the carrier phase difference or carrier phase relative value of the positioning signal.

22. The method of claim 1, wherein the first carrier phase measurement result is obtained by measuring the first positioning signal separately on at least one designated path;
the measurement report further comprises any of:
indication information, configured to indicate whether the designated path corresponding to the first carrier phase measurement result or the second carrier phase measurement result is a line of sight; or
probability information, configured to represent a probability that the designated path corresponding to the first carrier phase measurement result or the second carrier phase measurement result is a line of sight.

23. The method of claim 1, wherein the measurement report further comprises at least one of:
phase error group information corresponding to the first carrier phase measurement result;
phase error group information corresponding to the second carrier phase measurement result;
phase error group information corresponding to the Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a transmission reception point (TRP) identification ID;
a positioning signal ID;
a positioning signal set ID of a positioning signal set to which the positioning signal ID belongs;
a timestamp when the first carrier phase measurement result is measured; or
a timestamp corresponding to the second carrier phase measurement result.

24. The method of claim 1, wherein the measurement report further comprises at least one of:
an reference signal receiving power (RSRP)of the first positioning signal;
timing error group information corresponding to the RSRP of the first positioning signal;
an angle of arrival (AoA)of the first positioning signal;
timing error group information corresponding to the AoA of the first positioning signal;
an angle of departure (AoD)of the first positioning signal;
timing error group information corresponding to the AoD of the first positioning signal;
time of arrival (ToA)of the first positioning signal;
timing error group information corresponding to the ToA of the first positioning signal;
a time difference of arrival (TDoA) of the first positioning signal;
timing error group information corresponding to the TDoA of the first positioning signal;
round trip time (RTT) of the first positioning signal; or
timing error group information corresponding to the RTT of the first positioning signal.

25. The method of claim 23, wherein
the phase error group information comprises at least one of transmitting phase error group information, or receiving phase error group information; or,
the phase error group information comprises transmitting/receiving phase error group information.

26. The method of claim 23, wherein
the antenna reference point information comprises at least one of transmitting antenna reference point information, or receiving antenna reference point information; or
the antenna reference point information comprises transmitting/receiving antenna reference point information.

27. The method of claim 23 or 24, wherein
the timing error group information comprises at least one of transmitting timing error group information, or receiving timing error group information; or,
the timing error group information comprises transmitting/ receiving timing error group information.

28. A reporting method, performed by a core network device, comprising:
receiving a measurement report reported by a base station, wherein the measurement report comprises at least one of a first carrier phase measurement result, a Doppler parameter, or a second carrier phase measurement result, wherein the second carrier phase measurement result is obtained by adjusting the first carrier phase measurement result based on the Doppler parameter.

29. The method of claim 28, wherein the first carrier phase measurement result comprises at least one of:
a carrier phase value;
a carrier phase difference; or
a carrier phase relative value.

30. The method of claim 28, wherein the Doppler parameter comprises at least one of:
a Doppler frequency offset; or
a Doppler spread.

31. The method of claim 28, wherein the second carrier phase measurement result comprises at least one of:
a carrier phase value adjusted based on the Doppler parameter;
a carrier phase difference adjusted based on the Doppler parameter; or
a carrier phase relative value adjusted based on the Doppler parameter.

32. The method of claim 28, wherein the first carrier phase measurement result is obtained by measuring a first positioning signal separately on at least one designated path;
the measurement report further comprises any of:
indication information, configured to indicate whether the designated path corresponding to the first carrier phase measurement result or the second carrier phase measurement result is a line of sight;
probability information, configured to represent a probability that the designated path corresponding to the first carrier phase measurement result or the second carrier phase measurement result is a line of sight.

33. The method of claim 28, wherein the measurement report further comprises at least one of:
phase error group information corresponding to the first carrier phase measurement result;
phase error group information corresponding to the second carrier phase measurement result;
phase error group information corresponding to the Doppler parameter;
antenna reference point information corresponding to the first carrier phase measurement result;
antenna reference point information corresponding to the second carrier phase measurement result;
antenna reference point information corresponding to the Doppler parameter;
timing error group information corresponding to the first carrier phase measurement result;
timing error group information corresponding to the second carrier phase measurement result;
timing error group information corresponding to the Doppler parameter;
a transmission reception point (TRP) identification ID;
a positioning signal ID;
a positioning signal set ID of a positioning signal set to which the positioning signal ID belongs;
a timestamp when the first carrier phase measurement result is measured; or
a timestamp corresponding to the second carrier phase measurement result.

34. The method of claim 28, wherein the measurement report further comprises at least one of:
a reference signal receiving power (RSRP) of the first positioning signal;
timing error group information corresponding to the RSRP of the first positioning signal;
an angle of arrival (AoA) of the first positioning signal;
timing error group information corresponding to the AoA of the first positioning signal;
an angle of departure (AoD) of the first positioning signal;
timing error group information corresponding to the AoD of the first positioning signal;
time of arrival (ToA) of the first positioning signal;
timing error group information corresponding to the ToA of the first positioning signal;
a time difference of arrival (TDoA) of the first positioning signal;
timing error group information corresponding to the TDoA of the first positioning signal;
round trip time (RTT) of the first positioning signal; or
timing error group information corresponding to the RTT of the first positioning signal.

35. The method of claim 33, wherein
the phase error group information comprises at least one of transmitting phase error group information, or receiving phase error group information; or,
the phase error group information comprises transmitting/receiving phase error group information.

36. The method of claim 33, wherein
the antenna reference point information comprises at least one of transmitting antenna reference point information, or receiving antenna reference point information; or
the antenna reference point information comprises transmitting/receiving antenna reference point information.

37. The method of claim 33 or 36, wherein
the timing error group information comprises at least one of transmitting timing error group information, or receiving timing error group information; or,
the timing error group information comprises transmitting/receiving timing error group information.

38. A communication device, configured in a terminal device, comprising:
a transceiver module, configured to receive at least one first positioning signal sent by a first TRP; and
a processing module, configured to measure the first positioning signal to obtain a measurement result, wherein the measurement result comprises at least one of a first carrier phase measurement result, a Doppler parameter, or a second carrier phase measurement result, wherein the second carrier phase measurement result is obtained by adjusting the first carrier phase measurement result based on the Doppler parameter;
the transceiver module is further configured to report a measurement report to a core network device, wherein the measurement report comprises the measurement result.

39. A communication device, configured in a base station, comprising:
a transceiver module, configured to receive at least one positioning signal sent by a terminal device; and
a processing module, configured to measure the positioning signal to obtain a measurement result, wherein the measurement result comprises at least one of a first carrier phase measurement result, a Doppler parameter, or a second carrier phase measurement result, wherein the second carrier phase measurement result is obtained by adjusting the first carrier phase measurement result based on the Doppler parameter;
the transceiver module is configured to report a measurement result to a core network device, wherein the measurement report comprises the measurement result.

40. A communication device, configured in a core network device, comprising:
a transceiver module, configured to receive a measurement report reported by a base station, wherein the measurement report comprises at least one of a first carrier phase measurement result, a Doppler parameter, or a second carrier phase measurement result, wherein the second carrier phase measurement result is obtained by adjusting the first carrier phase measurement result based on the Doppler parameter.

41. A communication device, comprising a processor and a memory, wherein the memory stores a computer program, and the processor is configured to execute the computer program stored in the memory to cause the device to implement the method of any of claims 1 to 14, or the processor is configured to execute the computer program stored in the memory to cause the device to implement the method of any of claims 15 to 27, or the processor is configured to execute the computer program stored in the memory to cause the device to implement the method of any of claims 28 to 37.

42. A communication device, comprising a processor and an interface circuit, wherein
the interface circuit is configured to receive code instructions and send the code instructions to the processor; and
the processor is configured to run the code instructions to implement the method of any of claims 1-14, or run the code instructions to implement the method of any of claims 15-27, or run the code instructions to implement the method of any of claims 28-37.

43. A computer readable storage medium, stored with instructions which, when executed, cause the method of any of claims 1-14 to be implemented, or the method of any of claims 15-27 to be implemented, or the method of any of claims 28-37 to be implemented.
